(19) Europäisches Patentamt
European Patent Office
Office européen des brevets

(11) **EP 3 529 401 B1**

(12) **EUROPEAN PATENT SPECIFICATION**

(45) Date of publication and mention
of the grant of the patent:
**17.11.2021 Bulletin 2021/46**

(51) Int Cl.:
*D01F 6/62* *(2006.01)*    *B29C 64/118* *(2017.01)*
*B33Y 70/00* *(2020.01)*    *C08G 63/672* *(2006.01)*
*B29K 67/00* *(2006.01)*

(21) Application number: **17797791.5**

(22) Date of filing: **12.10.2017**

(86) International application number:
**PCT/US2017/056264**

(87) International publication number:
**WO 2018/075322 (26.04.2018 Gazette 2018/17)**

(54) **POLYESTER FILAMENT AND USE IN FUSED FILAMENT FABRICATION**

POLYESTER-FILAMENT ZUR VERWENDUNG VON VERSCHMOLZENEN FILAMENT HERSTELLUNG

FILAMENTS DE POLYESTER ET UTILISATION DANS LA FABRICATION DE FILAMENTS FUSIONNÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.10.2016 US 201662411092 P**

(43) Date of publication of application:
**28.08.2019 Bulletin 2019/35**

(73) Proprietor: **E. I. du Pont de Nemours and Company Wilmington, DE 19805 (US)**

(72) Inventors:
• **CAO, Yanyan**
**Wilmington, Delaware 19803 (US)**
• **SMITH, Edward Maxwell De Brant**
**Wilmington, Delaware 19803 (US)**

(74) Representative: **Heinemann, Monica et al**
**Abitz & Partner**
**Patentanwälte mbB**
**Arabellastraße 17**
**81925 München (DE)**

(56) References cited:
**WO-A1-2011/073308      JP-A- H09 221 584**
**JP-A- H11 199 763      US-A1- 2011 294 961**

## Description

Field of the Invention

The disclosure generally relates to filaments for use in fused filament fabrication (FFF) and articles containing the aforementioned, and more particularly, filaments made of compositions comprising polyester thermoplastic elastomers.

Background of the Invention

Fused fabrication, also known as additive manufacturing or 3-dimensional printing (3D printing), is a process by which successive layers of a composition are deposited and fused to produce an article having a defined shape. The term "fused" is meant that the successive layers adhere to one another. Fused filament fabrication (FFF) is a specific type of fused fabrication process in which the composition enters the 3D printing device as a filament, fiber, or strand and a 3D object is formed by extruding the composition through a nozzle to form layers as the composition hardens after extrusion, *i.e.*, layer-by-layer deposition. Fused filament fabrication simplifies material handling and compaction of material to be deposited as compared to using pellets or powders.

US 2011/294961 discloses molded articles including compositions comprising a melt mixed blend including copolyester thermoplastic elastomers (TPEs) having long-chain ester units.

D2 discloses molding compositions with soft segments comprising a polyester mainly composed of an aromatic dicarboxylic acid and a long-chain diol.

Summary of the Invention

A first aspect of the present invention relates to a filament, comprising a polyester thermoplastic elastomer having a shore D hardness (ISO 868 1 second measurement) of 41 or greater, and thermal properties of: a) a melting peak temperature (A), when the temperature is increased at a rate of 10°C/minute, in a range from about 130 to about 205 °C; and b) a crystallization peak temperature (B), when the temperature is decreased at a rate of 10°C/minute, in a range from about 50 to about 140 °C; as measured by DSC.

A second aspect of the present invention relates to a 3-dimensional article comprising a plurality of layers, wherein at least one layer is formed by additive manufacturing deposition of a filament comprising: a polyester thermoplastic elastomer having a shore D hardness (ISO 868 1 second measurement) of 41 or greater, and thermal properties of: a) a melting peak temperature (A), when the temperature is increased at a rate of 10°C/minute, in a range from about 130 to about 205° C; and b) a crystallization peak temperature (B), when the temperature is decreased at a rate of 10°C/minute, in a range from about 50 to about 140 °C; as measured by DSC.

Detailed Description of the Invention

Abbreviations

The claims and description herein are to be interpreted using the abbreviations and definitions set forth below: "%" refers to the term percent; "mol %" refers to mole percent; "wt %" refers to weight percent; and one of skill in the art uses and recognizes this term of measurement.

Definitions

As used herein, the article "a" refers to one as well as more than one and does not necessarily limit its referent noun to the grammatical category of singular number.

As used herein, the terms "about" and "at or about", when used to modify an amount or value, refers to an approximation of an amount or value that is more or less than the precise amount or value recited in the claims or described herein. The precise value of the approximation is determined by what one of skill in the art would recognize as an appropriate approximation to the precise value. As used herein, the term conveys that similar values, not precisely recited in the claims or described herein, can bring about results or effects that are equivalent to those recited in the claims or described herein, for which one of skill in the art would acknowledge as acceptably brought about by the similar values.

As used herein, the term "article" refers to an unfinished or finished item, thing, object, or an element or feature of an unfinished or finished item, thing or object. As used herein, when an article is unfinished, the term "article" may refer to any item, thing, object, element, device, etc. that has a form, shape, configuration that may undergo further processing in order to become a finished article. As used herein, when an article is finished, the term "article" refers to an item, thing, object, element, device, etc. that is in a form, shape, configuration that is suitable for a particular use/purpose without further processing of the entire entity or a portion of it.

An article may comprise one or more element(s) or subassembly(ies) that either are partially finished and awaiting further processing or assembly with other elements/subassemblies that together will comprise a finished article. In addition, as used herein, the term "article" may refer to a system or configuration of articles.

Ranges and Preferred Variants

Any range set forth herein expressly includes its endpoints unless explicitly stated otherwise. Setting forth an amount, concentration, or other value or parameter as a range specifically discloses all possible ranges formed from any possible upper range limit and any possible lower range limit, regardless of whether such pairs of upper and lower range limits are expressly disclosed herein. Compounds, processes and articles described herein are not limited to specific values disclosed in defining a range in the description.

The disclosure herein of any variation in terms of materials, chemical entities, methods, steps, values, and/or ranges, etc.-whether identified as preferred or not-of the processes, compounds and articles described herein specifically intends to include any possible combination of materials, methods, steps, values, ranges, etc. For the purpose of providing photographic and sufficient support for the claims, any disclosed combination is a preferred variant of the processes, compounds, and articles described herein.

In this description, if there are nomenclature errors or typographical errors regarding the chemical name any chemical species described herein, including curing agents of formula (I), the chemical structure takes precedence over the chemical name. And, if there are errors in the chemical structures of any chemical species described herein, the chemical structure of the chemical species that one of skill in the art understands the description to intend prevails.

Generally

Additive manufacturing, also known as fused fabrication, is used to print or otherwise build 3D parts from digital representations of the 3D parts (*e.g.*, AMF and STL format files) using one or more additive manufacturing techniques. Examples of commercially available additive manufacturing techniques include jetting, selective laser sintering, powder/binder jetting, electron-beam melting, and stereolithographic processes. For each of these techniques, the digital representation of the 3D part is initially sliced into multiple horizontal layers. For each sliced layer, a tool path is then generated, which provides instructions for the particular additive manufacturing system to print the given layer.

The aforementioned processes can be costly, especially the laser based processes involving the use of high power lasers.

More economical is the fused filament fabrication process (FFF) also known as fused deposit modeling (FDM). A three-dimensional object is produced by extruding a thermoplastic material through a nozzle to form layers as the thermoplastic material hardens after extrusion. A polymeric filament is unwound from a coil and supplies thermoplastic material to the extrusion nozzle which can be turned on or off to control the flow. There is typically a worm-drive that pushes the filament into the nozzle at a controlled rate. The nozzle is heated to heat the thermoplastic material past its melting and/or glass transition temperature and is then deposited by the extrusion head on a base to form a three-dimensional object in a layer-wise fashion. The thermoplastic material is typically selected and its temperature is controlled so that it solidifies substantially immediately upon extrusion or dispensing onto the base, with the buildup of multiple layers to form the desired three-dimensional object.

Thermoplastic material such as thermoplastic elastomers (TPEs) having a combination of flexibility and strength are used to make shoes, sporting goods, various automotive and airplane parts, and various other articles via 3D printing processes. A number of soft TPEs have been developed for FFF such as: Ninjaflex® and Wolfblend TPU (thermoplastic polyurethane), and Arietitid, and PRIMALLOY™ (thermoplastic copolyesters). Medium to hard TPEs with good mechanical properties are generally difficult to use in FFF processes due to their increased crystallinity and high freezing point. Resultant printed parts tend to warp during printing and layers can delaminate from the print bed before the whole part has finished the printing process. In addition to warpage problem, printed parts can also suffer from poor mechanical properties in the vertical direction due to poor interlayer adhesion. Microscopic and macroscopic cracks could develop along the printing lines that may lead to part performance issues.

A need exists for medium to hard TPEs that are useful in 3D printing processes and in particularly, FFF processes. A need also exists for medium to hard TPEs that are useful for increasing the performance characteristics of resultant 3D printed articles.

Applicants have discovered that filaments comprising specific polyester thermoplastic elastomers address the industry needs described herein.

Applicants have discovered that medium to hard polyester TPE block copolymers, typically not useful in FFF, can be made useful by modifying the composition of the block copolymer. The discovery is not simply changing the percent of hard segment to percent soft segment present in the block copolymer but instead modifying the chemical structure of the polymer itself.

Specifically disclosed herein is a filament, comprising a polyester thermoplastic elastomer, said polyester thermoplastic elastomer having a Shore D hardness of 41 or greater measured according to ISO 868:2003 (1 second measurement) and comprising:

> a) 40 wt % to about 92 wt % hard segments, said hard segments prepared from:

>> i) at least one dicarboxylic acid or diester; and
>> ii) at least one aliphatic diol containing 2-8 carbon atoms;

> b) 8 wt % to 60 wt% soft segments, said soft segments prepared from:

>> iii) at least one dicarboxylic acid or diester; and
>> iv) at least one polyalkylene glycol or polyalkylene ether glycol;

wherein said filament exhibits:

> a melting peak temperature (A), when the temperature is increased at a rate of 10°C/minute, in a range from about 130° C to about 205 ° C;
> a crystallization peak temperature (B), when the temperature is decreased at a rate of 10°C/minute, in a range from 50° C to about 140° C; as measured by DSC; and wherein melting peak temperature (A) and crystallization peak temperature (B) are measured according to ISO 11357-3:2001.

Also disclosed herein is a method for preparing a 3D printed article from a filament, said filament comprising a polyester thermoplastic elastomer, said polyester thermoplastic elastomer having a Shore D hardness of 41 or greater measured according to ISO 868:2003 (1 second measurement) and comprising:

> a) 40 wt % to about 92 wt % hard segments, said hard segments prepared from:

>> i) at least one dicarboxylic acid or diester; and
>> ii) at least one aliphatic diol containing 2-8 carbon atoms;

> b) 8 wt % to 60 wt% soft segments, said soft segments prepared from:

>> iii) at least one dicarboxylic acid or diester; and
>> iv) at least one polyalkylene glycol or polyalkylene ether glycol;

wherein said filament exhibits:

> a melting peak temperature (A), when the temperature is increased at a rate of 10°C/minute, in a range from about 130° C to about 205 ° C;
> a crystallization peak temperature (B), when the temperature is decreased at a rate of 10°C/minute, in a range from 50° C to about 140° C; as measured by DSC; and wherein melting peak temperature (A) and crystallization peak temperature (B) are measured according to ISO 11357-3:2001.

Further disclosed herein are 3-dimensional articles prepared from the filaments disclosed herein wherein the 3- dimensional articles exhibit reduced warpage, less cracks along the print line, improved strength in the vertical direction, and improved surface appearance.

Thermoplastic Elastomers

Polyester TPEs for use in filaments are disclosed herein. An example of a polyester TPE includes but is not limited to copolyether-esters, or copolyester-esters. Other examples of useful polyester TPEs are described in U.S. Pat. No. 8,415,415; column 4, line 24 to column 8, line 67. The description in column 4, line 24 to column 8, line 67 of U.S. Pat. No. 8,415,415 is incorporated herein by reference in its entirety. The block copolymer has a hard segment exhibiting crystallinity and a soft segment exhibiting flexibility.

The hard segment of the polyester TPE block copolymer contains short chain ester units, alternatively referred to as polyester oligomers. As used herein, the term "short-chain ester units" as applied to hard segments in a polymer chain of the copolyetherester refers to low molecular weight compounds or polymer chain units having molecular weights less than about 550. They are made by reacting a low molecular weight diol or a mixture of diols (molecular weight below about 250) with a dicarboxylic. Preferred diols are aliphatic diols containing 2-8 carbon atoms, and a more preferred diol is 1,4-butanediol. Equivalent ester-forming derivatives of diols are also useful. The hard segment may be present in a range from about 40 wt % to about 92 wt %, or preferentially 45%wt to 85%wt.. Dicarboxylic acids that can react with the foregoing low molecular weight diols to produce the hard segment are aliphatic, cycloaliphatic or aromatic dicarboxylic acids of a low molecular weight, i.e., having a molecular weight of less than about 300. The term "dicarboxylic acids" as used herein includes functional equivalents of dicarboxylic acids that have two carboxyl functional groups that perform substantially like dicarboxylic acids in reaction with glycols and diols in forming copolyetherester polymers. These equivalents include esters and ester-forming derivatives such as acid halides and anhydrides. The dicarboxylic acids can contain any substituent groups or combinations that do not substantially interfere with the copolyetherester polymer formation. Aromatic dicarboxylic acids, as the term is used herein, are dicarboxylic acids having two carboxyl groups each attached to a carbon atom in a carbocyclic aromatic ring structure. It is not necessary that both functional carboxyl groups be attached to the same aromatic ring and where more than one ring is present, the rings can be joined by aliphatic or aromatic divalent radicals or divalent radicals such as - O- or -SO2-. Aromatic dicarboxylic acids are a preferred class for preparing the copolyetherester elastomer useful for this invention. Among the aromatic acids, those with 8-16 carbon atoms are preferred, particularly terephthalic acid alone or with mixture of phthalic and/or isophthalic acids. In an embodiment, the hard segment is 82 wt % of the block copolymer. In another embodiment, the hard segment is 49 wt %.

The hard segment may comprise a polymer or a copolymer. When the hard segment is a copolymer, the fraction of terephthalate with respect to total diacid ranges from about 95 mol% to about 60 mol%.

An example of hard segment includes but is not limited to polybutylene terephthalate-polybutylene isophthalate. The ratio of polybutylene terephthalate to polybutylene isophthalate therein may be in range from about 95 mol% : 5 mol% to about 60 mol% : 40 mol%. In an embodiment, the ratio of polybutylene terephthalate to polybutylene isophthalate 70 mol% : 30 mol%. In another embodiment, the ratio of polybutylene terephthalate to polybutylene isophthalate is 77.5 mol% : 22.5 mol%.

The soft segment of the polyester TPE block copolymer may contain a polyalkylene glycol or polyalkylene ether glycol. The soft segment may be present in a range from about 8 wt % to about 60 wt%. In an embodiment, the soft segment is 18 wt % of the block copolymer. In another embodiment, the soft segment is 51 wt %.

Examples of polyalkylene glycols for use as a soft segment include but are not limited to polytetramethylene ether glycol.

The polyester TPE block copolymer may contain about 20 wt% to about 92 wt% of hard segment and about 8 wt % to about 60 wt% soft segment. Preferably, the polyester TPE block copolymer comprises 49 wt% to about 82 wt% of a hard segment and about 18 wt% to about 51 wt% of a soft segment. Non-limiting examples of polyester TPE block copolymers include those comprising 82 wt % of hard segment and 18 wt % soft segment or 49% of hard segment and 51% soft segment.

Polyester TPE block copolymers for use in filaments disclosed herein include but are not limited to polybutylene terephthalate-polybutylene isophthalate polytetramethylene ether glycol block copolymer. Examples of polyester TPE block copolymers for use in filaments disclosed herein are available from E.I. DuPont de Nemours, Wilmington, Delaware, USA.

A preferred example of the polyester thermoplastic elastomers disclosed herein are block copolymer of polybutylene terephthalate-polybutylene isophthalate and polyalkylene glycol.

The polyester thermoplastic elastomer compositions useful for preparing filaments may be produced by feeding multiple polymers, and optionally other additives, into a device designed to mix molten thermoplastic polymers such as a single or twin screw extruder, Banbury® mixer, Farrel Continuous Mixer (FCM™), or a two-roll mill. Such processes are well known in the art.

Filaments

Filaments useful in FFF are disclosed herein. The filaments comprise a polyester TPEs disclosed herein and the polyester TPEs may have a shore D hardness of 41 or greater according to ISO 868 1 second measurement. In an embodiment, the polyester TPE may have a shore D hardness of 41 or greater. The polyester TPEs may also have a shore D hardness in a range from about 41 to about 85. In an embodiment, the polyester TPE may also have a shore D hardness in a range from about 43 to about 61. In another embodiment, the polyester TPEs may have a shore D hardness of 43. In an embodiment, the polyester TPE may also have a shore D hardness of 61.

The filaments useful in FFF may have certain thermal properties as disclosed herein. Filaments may have the same physical properties as the polymer resin from which they were made from, but one having ordinary skill in the art will recognize that filament extrusion can change the crystallization behavior (for example; if the extruder is dirty, the dirt could nucleate the material increasing the freeze point. Also, if you mix additives or colors during the extrusion you could change the freezing behavior). One having ordinary skill in the art of filament extrusion will recognize that certain properties of extruded filaments can be inherited from the polymer composition which is fed into the extruder.

Filaments useful in preparing 3D printed articles by FFF may have diameters ranging from about 0.5 to 100 mm, preferably 1 to 4 mm. Filaments to be used for FFF processes may be wound onto a reel, spool, or other device such that the filament can be unwound for 3D printing. The wound filament reel or spool may be attached by a cartridge to a 3D printer for printing.

The polyester TPEs may have a melting peak temperature (A), when the temperature is increased at a rate of 10°C/minute, in a range from about 130 to about 205° C; a crystallization peak temperature (B,) when the temperature is decreased at a rate of 10°C/minute, in range from about 50 C to about 140° C; as measured by DSC.

In an embodiment, polyester TPEs may have a shore D hardness of 41 or greater according to ISO 868 1 second measurement and may have a melting peak temperature (A), when the temperature is increased at a rate of 10°C/minute, in a range from about 130° C to about 205° C; and a crystallization peak temperature (B,) when the temperature is decreased at a rate of 10°C/minute, in range from about 50° C to about 140° C; as measured by a differential scanning calorimeter (DSC).

Additives to improve the ultraviolet stability or the thermo-oxidative stability of the polymers may be added before or during filament extrusion. Classes of additives are UV absorbers, hindered amine light stabilizers, primary antioxidants, secondary antioxidants, phosphites and phosphonites. These broad classes of additives are well known to those skilled in the art of resin formulation and are detailed in "Plastics Additives Handbook", 5th Edition, ed. Hans Zweifel, pub HANSER, 2001.

Process for Producing Filaments

The filaments described herein, strand, or fiber for use in a fused fabrication process may be formed by any method known in the art. For example, pellets comprising the polyester thermoplastic elastomer described herein may be fed into an extruder in which the temperature in the extruder is at least 10 °C greater than the melting peak temperature of the polyester thermoplastic elastomer. The melted polymer composition is extruded through a die and subsequently cooled to form the filament, strand, or fiber of the desired diameter.

Process for Producing FFF Articles

Polyester TPEs described herein may be used to prepare filaments, fibers, and strands and the aforementioned then used for producing articles by fused fabrication processes. The polyester TPEs filaments described herein, allow articles to be prepared using 3D printing techniques and in particular, FFF. Such articles exhibit desirable properties such as reduced warpage, less cracks along the print line, improved strength in the vertical direction, and improved surface appearance compared to articles not produced using polyester TPEs described herein.

Articles may be prepared by fused filament fabrication wherein the temperature of the die is at least 10 °C less than the melting peak temperature of the polyester TPE filament. During fused filament fabrication, the polyester TPE filament is heated to a temperature of about 130 °C to about 310 °C, preferably from about 185 °C to about 280 °C.

Fused filament fabrication is a process commonly used to prepare articles from filaments. Generally, in fused filament fabrication, a filament, comprising the polymer composition disclosed herein, is fed through a heated die wherein the temperature of the die is sufficiently high to melt the filament to a viscosity of at least 0.1 g/10 min. The molten filament exits the die and is deposited in a layer-by-layer fashion to form the desired article. Control of deposition rate may be varied by altering the filament feed rate, filament cross sectional dimensions, and the rate of motion of the die head and/or article.

Examples

The exemplary compounds identified by "E" in the tables below are intended only to further illuminate and not to limit the scope of compounds, processes, and articles described and recited herein. Comparative examples are identified in the tables below by "C".

Materials

PBI = polybutylene isophthalate and PBT = polybutylene terephthalate

TPE-1. Polyester thermoplastic elastomer with 18% wt. PTMEG soft segment and 82% wt. hard segment. The hard segment contains 30% mol PBI and 70% PBT.

TPE-2. Polyester thermoplastic elastomer with 51% wt. PTMEG soft segment and 49% wt. hard segment. The hard segment contains 22.5% mol PBI and 77.5% PBT.

TPE-3. Polyester thermoplastic elastomer with 18% wt. PTMEG soft segment and 82% wt. hard segment. The hard segment contains 100% PBT.

TPE-4. Polyester thermoplastic elastomer with 40% wt. PTMEG soft segment and 60% wt. hard segment. The hard segment contains 100% PBT.

TPE-5. Polyester thermoplastic elastomer with 52% wt. PTMEG soft segment and 48% wt. hard segment. The hard segment contains 100% PBT.

TPE-6. Polyester thermoplastic elastomer with 51% wt. PTMEG soft segment and 49% wt. hard segment. The hard segment contains 15% mol PBI and 85% PBT.

TPE-3, TPE-4 and TPE-5 are comparative examples and TPE-1, TPE-2 and TPE-6 are examples of desirable TPEs as disclosed herein.

Test Methods

Melting peak temperature and crystallization peak temperature were measured according to ISO 11357-3:2001.

Shore D hardness was measured according to ISO 868:2003 (1 second measurement).

Tensile Stress at Break and Tensile Strain at Break were measured according to ISO 527:-2:2012 using Type 5A. 1BA, or Type 1A bars at a strain rate of 50 mm/min, as specified in the Examples. "Flat" Type 5A and Type 1A bars were printed directly on the printer bed. "Vertical" Type 5A, 1BA, and Type 1A bars and "On-Edge" Type 5A bars were pressed using the appropriate die from a rectangle as shown in Fig. 1 and Fig. 2. In the case of Type 5A and 1BA bars, the size of the rectangle was 80 mm length x 2 mm width x 85 mm height or 40 mm length x 2 mm width x 85 mm height. It was printed in the vertical direction with two supporting side walls (20 mm length x 2 mm width x 85 mm height). In the case of Type 1A bars, the size of the rectangle was 65 mm length x 4 mm width x 162 mm height. It was printed in the vertical direction with two supporting side walls (38 mm length x 2 mm width x 165 mm height). In each case the rectangle and supporting side walls were further supported by the addition of a 20-line brim. An example of these structures along with a pressed bar from the rectangle are shown in Figure 2. "On-Edge" Type 1A bars were printed with support material utilizing the same ionomer material as used in the tensile bar itself. The support material was easily removed with scissors. Alternatively, "Vertical" Type 5A bars were printing using a .stl file of 4 Type 5A bars supported by a central pillar. The bars were easily separated from the central pillar with scissors.

Tensile modulus was measured following ISO 527-2:2012 using type 1A testing bars at a strain rate of 50 mm/min.

Relative strength (RS) was calculated according to Equation (I) below, wherein the tensile strength at break and percent elongation at break are each measured pursuant to ISO 527.

$$RS = (\text{tensile strength at break}) \times (\%\ \text{elongation at break}/100)$$

All printed test bars were printed by the FFF process described herein. The printed test bars were conditioned at 23 °C at 50% relative humidity for at least 40 h before physical property testing.

Process for Making Filaments

Filaments used in the examples were produced by feeding pellets of polyester thermoplastic elastomers of desired compositions into a Werner & Pfleiderer 28 mm twin screw extruder or a 1 and 1/4 inch (32 mm) Brabender single screw extruder equipped with a Zenith PEP-II melt pump. Both extruders produce filaments having essentially identical properties. The barrel temperatures and melt pump temperature were set between 170-240 °C depending on the specific polymer composition being used and determining the proper extrusion temperature is easily within one of skill in the art. The melt mixture extruded from the die was quenched in a water bath at a temperature between 5-60 °C to form a filament. The filament was moved by a strand puller at a rate to prevent breakage and wound into spools. Two diameters of filaments, 2.85 mm and 1.75 mm, were produced by adjusting the pulling rate.

Table 1 below summarizes the conditions used to produce the filaments.

Table 1

|  | Extruder | Temperature (°C) |
|---|---|---|
| TPE-1 | Werner & Pfleiderer 28 mm twin screw extruder | 200 |

(continued)

|  | Extruder | Temperature (°C) |
|---|---|---|
| TPE-2 | Werner & Pfleiderer 28 mm twin screw extruder | 200 |
| TPE-3 | Werner & Pfleiderer 28 mm twin screw extruder | 250 |
| TPE-4 | Werner & Pfleiderer 28 mm twin screw extruder | 210 |
| TPE-5 | Werner & Pfleiderer 28 mm twin screw extruder | 210 |
| TPE-6 | $1\frac{1}{4}$ inch (32 mm) Brabender single screw extruder | 190 |

Fused Filament Fabrication Process

The following printers were used, as specified, for the examples described herein: (a) Lulzbot® Mini (Aleph Objects, Inc. (Loveland, CO) equipped with a standard direct-drive extruder and 0.5 mm nozzle and utilizing nominally 2.85 mm filament. (b) Lulzbot® Mini (Aleph Objects, Inc. (Loveland, CO) equipped with a flexystruder direct-drive extruder and 0.6 mm nozzle and utilizing nominally 2.85 mm filament. (c) 3ntr A4v3 (3ntr, Oleggio, Italy; also available from Plural AM of Portland, OR) equipped with two indirect drive and one direct drive extruder, all with 0.4 mm nozzles and utilizing nominally 2.85 mm filament. (d) Makergear M2 (Makergear, LLC; Beachwood, OH) equipped with a direct-drive extruder and utilizing nominally 1.75 mm filament.

The curl or warpage of the material manifests itself by the ends of the test bar curling up, such that the test bar will bow or curl. The curl measurement involves identifying a line that connects the ends of test bar in the longest dimension and locating the midpoint along the length of the test bar between these ends. The amount of curl is then measured as the height of the displacement of the ends of the test bar measured from the line between the two ends of the test bar to the surface of the test bar at the midpoint. This height of the displacement may be measured with a micrometer and recorded in mm. In other words, a line is drawn between the edge of the two ends in the lengthwise direction (longest direction) of the test bar. The distance or height between the midpoint of the test bar in the lengthwise direction and the line created by the two ends of the test bar is the degree of curl in mm.

Test bars having dimension of 80 mm X 10 mm X 4 mm (L X W X H) were printed from filaments prepared from TPE-1, TPE-3, TPE-4, and TPE-6 for warpage or curl testing. Printing was performed on a polyether imide (PEI) print bed with nozzle temperatures of 180 to 280 °C and print bed temperature of 40 to 110 °C. TPE-1 printed nicely with good print bed adhesion and no warpage. TPE-3 test bar could not be printed due to severe warpage on the print bed which led to delamination of the partially finished bar from the print bed and printing had to be discontinued. TPE-4 behaves similarly to TPE-3. Warpage was less severe than TPE-3 but sufficient delamination from the bed occurred that printing had to be discontinued. TPE-6 printed with minor warpage that did not stop the printing from finishing at 15 mm/s and 40 °C bed temperature. TPE-6 printed with no warpage at 25 mm/s and 110 °C bed temperature. See Table 2 below for the curl measurement results.

Table 2

|  | Curl Measurement Results (mm) |
|---|---|
| TPE-1 | ≤ 0.5 |
| TPE-3 | ≥ 6.2 |
| TPE-4 | ≥ 2.7 |
| TPE-6 (printed at 15 mm/s, 40 °C bed) | 1.5 |
| TPE-6 (printed at 25 mm/s, 110 °C bed) | ≤ 0.5 |

TPE-1 and TPE-3 were printed into test bars having dimensions 40 mm X 2 mm X 85 mm (L X W X H). When printed at a filament speed of 15 mm/second the nozzle temperature was 230-280 °C and 110 °C bed temperature. TPE-1 printed successfully, whereas the TPE-3 part delaminated from the print bed in the middle of printing process due to warpage.

Mechanical properties were measured on vertical 1BA test bars cut from 40 mm x 2 mm x 85 mm (L X W X H) rectangles. The rectangles were printed with filaments prepared from TPE-1 and TPE-3 at 40 mm/second print speed, 280 °C nozzle temperature, and 110 °C bed temperature with the cooling fan turned off. Under these conditions, printing could be finished for both materials. There was some warpage on TPE-3 that did not lead to delamination of part from the print bed. However, there was deformation on the printed parts from TPE-3 filaments due to the extreme conditions used to minimize warpage.

Table 3 summarizes the differences between printed parts from filaments made from TPE-1 and TPE-3. TPE-1 comprises 30% PBI, whereas TPE-3 comprises no PBI in the hard segment. In addition to reducing warpage, the TPEs disclosed herein also have additional benefits such as less cracks along the print line, better accuracy of print, and better physical properties in the vertical direction.

Table 3

| | TPE-1 | TPE-3 |
|---|---|---|
| 80L x 10W x 4H (mm) Test Bar Printing Results | Successful print | Failed print (part warped off the print bed) |
| Vertical rectangle printing results at printing speed of 15 mm/s | Successful print | Failed print (part warped off the print bed) |
| Relative Strength (Vertical, MPa) | 321 | 5 |
| Stress at Break (Vertical, MPa) | 42 | 22 |
| Nominal Strain at Break (Vertical, %) | 764 | 22 |

The results in Table 3 clearly show an improvement of at least 100 % in both relative strength and nominal strain at break for 3D printed parts using the TPEs disclosed herein compared to TPEs which do not comprise PBI in the hard segment.

Vertical 5A test bars were printed from filaments prepared from TPE-2 and TPE-5 with a nozzle temperature of 185 to 240 °C and print bed temperature of 65 to 110 °C. TPE-2 had over 500% nominal strain at break, while TPE-5 had much lower nominal strain at break of about 100%.

**Claims**

1. A filament, comprising a polyester thermoplastic elastomer, said polyester thermoplastic elastomer having a Shore D hardness of 41 or greater measured according to ISO 868:2003 (1 second measurement) and comprising:

   a) 40 wt % to about 92 wt % hard segments, said hard segments prepared from:

      i) at least one dicarboxylic acid or diester; and
      ii) at least one aliphatic diol containing 2-8 carbon atoms;

   b) 8 wt % to 60 wt% soft segments, said soft segments prepared from:

      iii) at least one dicarboxylic acid or diester; and
      iv) at least one polyalkylene glycol or polyalkylene ether glycol;

   wherein said filament exhibits:

      a melting peak temperature (A), when the temperature is increased at a rate of 10°C/minute, in a range from about 130° C to about 205° C;
      a crystallization peak temperature (B), when the temperature is decreased at a rate of 10°C/minute, in a range from 50° C to about 140° C; as measured by DSC; and
      wherein melting peak temperature (A) and crystallization peak temperature (B) are measured according to ISO 11357-3:2001.

2. The filament of claim 1 wherein said dicarboxylic acids or diesters (i) and (iii) are the same and comprise a mixture of 60 to 95 mol % terephthalic acid and 5 to 40 mol % isophthalic acid.

3. The filament of claim 1 wherein said dicarboxylic acids or diesters (i) and (iii) are the same and comprise a mixture of 60 to 85 mol % terephthalic acid and 15 to 40 mol % isophthalic acid.

4. The filament of claim 1 wherein said dicarboxylic acids or diesters (i) and (iii) are the same and comprise a mixture of 60 to 95 mol % dimethyl terephthalate and 5 to 40 mol % dimethyl isophthalate.

5. The filament of claim 1 wherein said dicarboxylic acids or diesters (i) and (iii) are different.

6. The filament of claim 1 wherein said dicarboxylic acids or diesters (i) and (iii) are the same and comprise a mixture of 60 to 95 mol % terephthalic acid and 5 to 40 mol % isophthalic acid, wherein the at least one aliphatic diol (ii) is selected from the group consisting of 1,4-butanediol, 1,3-propanediol, and mixtures thereof, and wherein the at least one polyalkylene glycol or polyalkylene ether glycol (iv) is a polyalkylene glycol.

7. The filament of claim 1 wherein said dicarboxylic acids or diesters (i) and (iii) are the same and comprise a mixture of 60 to 95 mol % terephthalic acid and 5 to 40 mol % isophthalic acid, wherein the at least one aliphatic diol (ii) is selected from the group consisting of 1,4-butanediol, 1,3-propanediol, and mixtures thereof, and wherein the at least one polyalkylene glycol or polyalkylene ether glycol (iv) is poly(tetramethylene oxide) glycol.

8. The filament of claim 1 wherein said dicarboxylic acids or diesters (i) and (iii) are the same and comprise a mixture of 60 to 95 mol % terephthalic acid and 5 to 40 mol % isophthalic acid, wherein the at least one aliphatic diol (ii) is selected from the group consisting of 1,4-butanediol, 1,3-propanediol, and mixtures thereof, and wherein the at least one polyalkylene glycol or polyalkylene ether glycol (iv) is ethylene oxide-capped poly(propylene oxide) glycol.

9. A 3-dimensional article comprising a plurality of layers, wherein at least one layer is formed by fused filament fabrication of a filament heated to 160 °C to about 280 °C, said filament comprising a polyester thermoplastic elastomer, said polyester thermoplastic elastomer having a Shore D hardness of 41 or greater measured according to ISO 868:2003 (1 second measurement) and comprising:

   a) 40 wt % to about 92 wt % hard segments, said hard segments prepared from:

      i) at least one dicarboxylic acid or diester; and
      ii) at least one aliphatic diol containing 2-8 carbon atoms;

   b) 8 wt % to 60 wt% soft segments, said soft segments prepared from:

      iii) at least one dicarboxylic acid or diester; and
      iv) at least one polyalkylene glycol or polyalkylene ether glycol;

   wherein said filament exhibits, before printing:

      a melting peak temperature (A), when the temperature is increased at a rate of 10°C/minute, in a range from about 130° C to about 205° C;
      a crystallization peak temperature (B), when the temperature is decreased at a rate of 10°C/minute, in a range from 50° C to about 140° C; as measured by DSC; and wherein melting peak temperature (A) and crystallization peak temperature (B) are measured according to ISO 11357-3.

10. The 3- dimensional article of claim 9 wherein during fused filament fabrication said filament is heated to about 130 °C to about 310 °C, preferably from about 185 °C to about 280 °C.

**Patentansprüche**

1. Filament, umfassend ein thermoplastisches Polyesterelastomer, wobei das thermoplastische Polyesterelastomer eine Shore D-Härte von 41 oder mehr, ISO 868:2003 (1 Sekunde lange Messbestimmung) entsprechend gemessen, aufweist und Folgendes umfasst:

   a) 40 Gew.-% bis etwa 92 Gew.-% Hartsegmente, wobei die Hartsegmente hergestellt sind aus:

i) mindestens einer Dicarbonsäure oder einem Diester; und
ii) mindestens einem aliphatischen Diol, das 2-8 Kohlenstoffatome enthält;

b) 8 Gew.-% bis 60 Gew.-% Weichsegmente, wobei die Weichsegmente hergestellt sind aus

iii) mindestens einer Dicarbonsäure oder einem Diester; und
iv) mindestens einem Polyalkylenglykol oder Polyalkylenetherglykol;

wobei das Filament Folgendes aufweist:

eine Schmelzspitzentemperatur (A), wenn die Temperatur mit einer Rate von 10 °C/Minute erhöht wird, in einem Bereich von etwa 130 °C bis etwa 205 °C;
eine Kristallisationsspitzentemperatur (B), wenn die Temperatur mit einer Rate von 10 °C/Minute reduziert wird, in einem Bereich von 50 °C bis etwa 140 °C, wie durch DSC gemessen; und
wobei die Schmelzspitzentemperatur (A) und die Kristallisationsspitzentemperatur (B) ISO 11357-3:2001 entsprechend gemessen werden.

2. Filament nach Anspruch 1, wobei die Dicarbonsäuren oder Diester (i) und (iii) dieselben sind und eine Mischung von 60 bis 95 Mol-% Terephthalsäure und 5 bis 40 Mol-% Isophthalsäure umfassen.

3. Filament nach Anspruch 1, wobei die Dicarbonsäuren oder Diester (i) und (iii) dieselben sind und eine Mischung von 60 bis 85 Mol-% Terephthalsäure und 15 bis 40 Mol-% Isophthalsäure umfassen.

4. Filament nach Anspruch 1, wobei die Dicarbonsäuren oder Diester (i) und (iii) dieselben sind und eine Mischung von 60 bis 95 Mol-% Dimethylterephthalat und 5 bis 40 Mol-% Dimethylisophthalat umfassen.

5. Filament nach Anspruch 1, wobei die Dicarbonsäuren oder Diester (i) und (iii) verschieden sind.

6. Filament nach Anspruch 1, wobei die Dicarbonsäuren oder Diester (i) und (iii) dieselben sind und eine Mischung von 60 bis 95 Mol-% Terephthalsäure und 5 bis 40 Mol-% Isophthalsäure umfassen, wobei das mindestens eine aliphatische Diol (ii) aus der Gruppe ausgewählt ist bestehend aus 1,4-Butandiol, 1,3-Propandiol und Mischungen davon und wobei das mindestens eine Polyalkylenglykol oder Polyalkylenetherglykol (iv) ein Polyalkylenglykol ist.

7. Filament nach Anspruch 1, wobei die Dicarbonsäuren oder Diester (i) und (iii) dieselben sind und eine Mischung von 60 bis 95 Mol-% Terephthalsäure und 5 bis 40 Mol-% Isophthalsäure umfassen, wobei das mindestens eine aliphatische Diol (ii) aus der Gruppe ausgewählt ist bestehend aus 1,4-Butandiol, 1,3-Propandiol und Mischungen davon und wobei das mindestens eine Polyalkylenglykol oder Polyalkylenetherglykol (iv) Poly(tetramethylenoxid)glykol ist.

8. Filament nach Anspruch 1, wobei die Dicarbonsäuren oder Diester (i) und (iii) dieselben sind und eine Mischung von 60 bis 95 Mol-% Terephthalsäure und 5 bis 40 Mol-% Isophthalsäure umfassen, wobei das mindestens eine aliphatische Diol (ii) aus der Gruppe ausgewählt ist bestehend aus 1,4-Butandiol, 1,3-Propandiol und Mischungen davon und wobei das mindestens eine Polyalkylenglykol oder Polyalkylenetherglykol (iv) mit Ethylenoxid gekapptes Poly(propylenoxid)glykol ist.

9. 3-Dimensionaler Artikel umfassend eine Mehrzahl von Schichten, wobei mindestens eine Schicht durch Schmelzfilamentherstellung eines Filaments gebildet wird, das auf 160 °C bis etwa 280 °C erhitzt wird, wobei das Filament ein thermoplastisches Polyesterelastomer umfasst, wobei das thermoplastische Polyesterelastomer eine Shore D-Härte von 41 oder mehr, ISO 868:2003 (1 Sekunde lange Messbestimmung) entsprechend gemessen, aufweist und Folgendes umfasst:

a) 40 Gew.-% bis etwa 92 Gew.-% Hartsegmente, wobei die Hartsegmente hergestellt sind aus

i) mindestens einer Dicarbonsäure oder einem Diester; und
ii) mindestens einem aliphatischen Diol, das 2-8 Kohlenstoffatome enthält;

b) 8 Gew.-% bis 60 Gew.-% Weichsegmente, wobei die Weichsegmente hergestellt sind aus

iii) mindestens einer Dicarbonsäure oder einem Diester; und

iv) mindestens einem Polyalkylenglykol oder Polyalkylenetherglykol;

wobei das Filament vor dem Drucken Folgendes aufweist:

eine Schmelzspitzentemperatur (A), wenn die Temperatur mit einer Rate von 10 °C/Minute erhöht wird, in einem Bereich von etwa 130 °C bis etwa 205 °C;

eine Kristallisationsspitzentemperatur (B), wenn die Temperatur mit einer Rate von 10 °C/Minute reduziert wird, in einem Bereich von 50 °C bis etwa 140 °C, wie durch DSC gemessen; und

wobei die Schmelzspitzentemperatur (A) und die Kristallisationsspitzentemperatur (B) ISO 11357-3 entsprechend gemessen werden.

10. 3-Dimensionaler Artikel nach Anspruch 9, wobei das Filament während der Schmelzfilamentherstellung auf etwa 130 °C bis etwa 310 °C, bevorzugt etwa 185 °C bis etwa 280 °C, erhitzt wird.

**Revendications**

1. Filament, comprenant un élastomère thermoplastique de polyester, ledit élastomère thermoplastique de polyester possédant une dureté Shore D de 41 ou plus mesurée selon la norme ISO 868:2003 (mesure de 1 seconde) et comprenant:

a) de 40% en poids à 92% en poids de segments durs, lesdits segments durs étant préparés à partir de:

i) au moins un acide dicarboxylique ou diester, et
ii) au moins un diol aliphatique contenant 2-8 atomes de carbone;

b) de 8% en poids à 60% en poids de segments mous, lesdits segments mous étant préparés à partir de:

iii) au moins un acide dicarboxylique ou diester, et
iv) au moins un polyalkylène glycol ou polyalkylène éther glycol;

où ledit filament affiche:

une température maximum de fusion (A), lorsque la température est augmentée à une vitesse de 10°C/min, dans un intervalle d'environ 130°C à environ 205°C;

une température maximum de cristallisation (B), lorsque la température est diminuée à une vitesse de 10°C/min, dans un intervalle d'environ 50°C à environ 140°C; comme il est mesuré par DSC; et

où la température maximum de fusion (A) et la température maximum de cristallisation (B) sont mesurées selon la norme ISO 11357-3:2001.

2. Filament selon la revendication 1, dans lequel lesdits acides dicarboxyliques ou diesters (i) et (iii) sont les mêmes et comprennent un mélange de 60 à 95% en moles d'acide téréphtalique et de 5 à 40% en moles d'acide isophtalique.

3. Filament selon la revendication 1, dans lequel lesdits acides dicarboxyliques ou diesters (i) et (iii) sont les mêmes et comprennent un mélange de 60 à 85% en moles d'acide téréphtalique et de 15 à 40% en moles d'acide isophtalique.

4. Filament selon la revendication 1, dans lequel lesdits acides dicarboxyliques ou diesters (i) et (iii) sont les mêmes et comprennent un mélange de 60 à 95% en moles de diméhyltéréphtalate et de 5 à 40% en moles de diméthylisophtalate.

5. Filament selon la revendication 1, dans lequel lesdits acides dicarboxyliques ou diesters (i) et (iii) sont différents.

6. Filament selon la revendication 1, dans lequel lesdits acides dicarboxyliques ou diesters (i) et (iii) sont les mêmes et comprennent un mélange de 60 à 95% en moles d'acide téréphtalique et de 5 à 40% en moles d'acide isophtalique, dans lequel le au moins un diol aliphatique (ii) est choisi dans le groupe constitué de 1,4-butanediol, 1,3-propanediol et de mélanges de ceux-ci et dans lequel le au moins un polyalkylène glycol ou polyalkylène éther glycol (iv) est un polyalkylène glycol.

**7.** Filament selon la revendication 1, dans lequel lesdits acides dicarboxyliques ou diesters (i) et (iii) sont les mêmes et comprennent un mélange de 60 à 95% en moles d'acide téréphtalique et de 5 à 40% en moles d'acide isophtalique, dans lequel le au moins un diol aliphatique (ii) est choisi dans le groupe constitué de 1,4-butanediol, 1,3-propanediol et de mélanges de ceux-ci et dans lequel le au moins un polyalkylène glycol ou polyalkylène éther glycol (iv) est un poly(tétraméthylène oxyde) glycol.

**8.** Filament selon la revendication 1, dans lequel lesdits acides dicarboxyliques ou diesters (i) et (iii) sont les mêmes et comprennent un mélange de 60 à 95% en moles d'acide téréphtalique et de 5 à 40% en moles d'acide isophtalique, dans lequel le au moins un diol aliphatique (ii) est choisi dans le groupe constitué de 1,4-butanediol, 1,3-propanediol et de mélanges de ceux-ci et dans lequel le au moins un polyalkylène glycol ou polyalkylène éther glycol (iv) est un poly(propylène oxyde) glycol coiffé d'éthylène oxyde.

**9.** Article à 3 dimensions comprenant une pluralité de couches, dans lequel au moins une couche est formée par la fabrication de filaments fusionnés d'un filament chauffé à 160°C à environ 280°C, ledit filament comprenant un élastomère thermoplastique de polyester, ledit élastomère thermoplastique de polyester possédant une dureté Shore D de 41 ou plus mesurée selon la norme ISO 868:2003 (mesure de 1 seconde) et comprenant:

a) de 40% en poids à 92% en poids de segments durs, lesdits segments durs étant préparés à partir de:

i) au moins un acide dicarboxylique ou diester, et
ii) au moins un diol aliphatique contenant 2-8 atomes de carbone;

b) de 8% en poids à 60% en poids de segments mous, lesdits segments mous étant préparés à partir de:

iii) au moins un acide dicarboxylique ou diester, et
iv) au moins un polyalkylène glycol ou polyalkylène éther glycol;

où ledit filament affiche, avant impression:

une température maximum de fusion (A), lorsque la température est augmentée à une vitesse de 10°C/min, dans un intervalle d'environ 130°C à environ 205°C;
une température maximum de cristallisation (B), lorsque la température est diminuée à une vitesse de 10°C/min, dans un intervalle d'environ 50°C à environ 140°C; comme il est mesuré par DSC; et
où la température maximum de fusion (A) et la température maximum de cristallisation (B) sont mesurées selon la norme ISO 11357-3.

**10.** Article à 3 dimensions selon la revendication 9, dans lequel pendant la fabrication de filaments fusionnés ledit filament est chauffé à environ 130°C à environ 310°C, de préférence d'environ 185°C à environ 280°C.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011294961 A
- US 8415415 B

**Non-patent literature cited in the description**

- Plastics Additives Handbook. HANSER, 2001